# EUROPÄISCHE PATENTSCHRIFT

(11) **EP 4 271 553 B1**
(45) Veröffentlichungstag und Bekanntmachung des Hinweises auf die Patenterteilung: **16.10.2024**
(21) Anmeldenummer: 22823488.6
(22) Anmeldetag: 30.11.2022
(51) Int. Cl.: B29C 65/46, B29C 65/34, B60G 21/055, H05B 6/10, H05B 6/40

(54) **VORRICHTUNG UND VERFAHREN ZUM HAFTEN EINES ELASTOMERLAGERS AN EINE STABILISATORSTANGE**
DEVICE AND METHOD FOR ADHERING AN ELASTOMER BEARING TO AN ANTI-ROLL BAR
DISPOSITIF ET PROCÉDÉ POUR FAIRE ADHÉRER UN PALIER ÉLASTOMÈRE À UNE BARRE ANTI-ROULIS

(30) Priorität: 02.12.2021 DE 102021213743
(43) Veröffentlichungstag der Anmeldung: 08.11.2023
(73) Patentinhaber: ThyssenKrupp Federn und Stabilisatoren GmbH, 58119 Hagen (DE); thyssenkrupp AG, 45143 Essen (DE)
(72) Erfinder: STARKE, Tobias, 51709 Marienheide (DE); SCHMIDT, Alexander, 51674 Wiehl (DE); WOYCKE, Niklas, 45478 Mülheim an der Ruhr (DE); SCHNEIDER, Frank, 44229 Dortmund (DE)
(74) Vertreter: thyssenkrupp Intellectual Property GmbH
(86) Internationale Anmeldenummer: PCT/EP2022/083866
(87) Internationale Veröffentlichungsnummer: WO 2023/099573

(56) Entgegenhaltungen:
- EP-A1- 3 213 943
- JP-A- 2006 290 313

## Beschreibung

Die Erfindung bezieht sich auf eine Vorrichtung mit der ein Elastomerlager an eine Stabilisatorstange gehaftet werden kann. Hierbei wird die Stabilisatorstange induktiv erhitzt.

Stabilisatoren werden in Kraftfahrzeugen zwischen den Aufhängungen einer der Vorderachse, und teilweise auch zwischen den Aufhängungen einer oder mehrerer weiterer Achsen eingesetzt, um ein Wanken des Kraftfahrzeugs zu verhindern. Vereinfacht dargestellt umfassen Stabilisatoren eine Stabilisatorstange, die in der Nähe der Aufhängung eine Biegung aufweist, um in den Schenkeln zu münden, die mit der Radaufhängung verbunden werden. Die Stabilisatorstange weist typischerweise ein elektrisch leitfähiges Material, typischerweise Eisen, auf. Beispielsweise wird die Stabilisatorstange aus Stahl gefertigt. Die Stabilisatorstange wird typischerweise mittels zweier Elastomerlager mit der Karosserie des Kraftfahrzeugs verbunden.

Diese Stabilisatorlager sind im Stand der Technik auch als Hülsenlager bekannt. Diese weisen eine starre Außenhülse, auch als ringförmige Manschette bezeichnet, auf. Koaxial in dieser ringförmigen Manschette ist ein Elastomerlager angeordnet. Ebenso bekannt ist die Anordnung eines Elastomerlagers an einen Stabilisatorstab. Der Stabilisatorstab ist mittelst des Elastomerlagers, insbesondere unter Verwendung einer Schelle die das Elastomerlager zumindest teilweise umschließt, an einem Fahrzeugunterboden befestigt. Allgemein besteht eine starre Außenvorrichtung, welche an einem Fahrzeugunterboden befestigt wird, wobei innerhalb dieser Außenvorrichtung ein Elastomerlager koaxial um einen Stabilisator angeordnet ist.

Das Elastomerlager kann zwei Teile aufweisen. So kann das Elastomerlager die Stabilisatorstange vollständig umschließen. Alternativ kann das Elastomerlager auch einteilig, jedoch mit einem (axialen) Schnitt versehen, ausgebildet sein. Der Schnitt ermöglicht das Aufspreizen des Elastomerlagers, so dass die Stabilisatorstange durch die entstehende Öffnung hindurchgeführt werden kann. Das Elastomerlager kann aus einer oder mehreren nichtleitenden Materialzusammensetzungen, ausgewählt unter einer Gruppe von ganz oder teilweise vulkanisierten Elastomeren, insbesondere von Naturkautschuk, Poly(1,4-cis-isopren), Poly(1,4-trans-isopren), Synthesekautschuke, insbesondere Ethylen-Propylen-Kautschuke, Ethylen-Propylen-Dien-Kautschuke, Butylkautschuke, Silicon-Kautschuke, Butadiene und/oder dessen Mischpolymeriosate, Gummi, Polyurethane, thermoplasischen Elastomeren, insbesondere thermoplastische Elastomere auf Olefinbasis, vernetzte thermoplastische Elastomere auf Olefinbasis, thermoplastische Elastomere auf Urethanbasis, thermoplastische Polyesterelastomere, thermoplastische Copolyester, Styrol-Blockcopolymere, thermoplastische Copolyamide und Kombinationen hiervon, bestehen oder diese aufweisen.

Diese vorgenannten Elastomerlager können hinsichtlich ihrer Wirkweise in Gleitlager, Klemmlager, Haftlager und Klebelager unterschieden werden. Bei der Verwendung von Gleitlagern kann sich der Stabilisator gegen eine geringe Reibungskraft frei in torsionaler und axialer Richtung verschieben. Zur axialen Sicherung des Bauteils werden hierbei zusätzliche Vorkehrungen getroffen. Klemmlager stellen eine klemmende Verbindung zu dem Stabilisator her und weisen in einem entspannten Zustand einen im Vergleich zum Außendurchmesser des Stabilisators, an welcher das Klemmlager angeordnet wird, kleineren Innendurchmesser auf. Üblicherweise werden Klemmlager bei der Montage an einem Stabilisator vorgespannt und dann an dem Stabilisator angeordnet. Klemmlager können zudem eine koaxiale Innenhülse aufweisen. Haftlager stellen unter Anwendung eines Haftsystems eine haftende Verbindung zu dem Stabilisator her, wobei die elastische Innenkontur wenigstens teilweise an der Mantelfläche des Stabilisators, an welcher das Haftlager angeordnet wird, haftet. Zur Haftung des an dem Stabilisator angeordneten Haftlagers sind im Stand der Technik eine Vielzahl von Haftsystemen, insbesondere umfassend einen Primer und einen Cover, bekannt. Um die Haftung herzustellen werden die Elastomerlager und die Stabilisatorstange zusammengepresst und erhitzt. Das Erhitzen der Stabilisatorstange kann induktiv erfolgen, da diese das leitfähige Material aufweist. Das Elastomerlager stellt hierbei aufgrund seines nichtleitenden Materials kein Hindernis dar.

Problematisch wird es jedoch bei dem Zusammenpressen. Hierzu wird eine Spanneinheit, auch als Spannwerkzeug bezeichnet, verwendet. Dieses ist vorteilhafterweise so massiv ausgeführt, dass es die für den Haftprozess benötigten Vorspannkräfte auf das Elastomerlager aufbringen kann. Das Spannwerkzeug kann ein äußeres Werkzeugelement und wechselbaren Formeinsätzen, in die das Elastomerlager eingelegt wird, umfassen.

Typischerweise wird die Stabilisatorstange geometrisch so ausgelegt, dass das Elastomerlager sehr dicht an einer Biegung der Stabilisatorstange positioniert ist. Dort kann das Spannwerkzeug jedoch nicht mehr angelegt werden, da dieses dann mit dem Schenkel der Stabilisatorstange in Kontakt gerät. Als Lösung werden die Formeinsätze für die Aufnahme des Elastomerlagers seitlich aus der Mittelachse des Spannwerkzeugs, d.h. axial zu der Stabilisatorstange, versetzt angeordnet. Das äußere Werkzeugelement des Spannwerkzeugs und die wechselbaren Formeinsätze mit dem eingelegten Elastomerlager weisen dann keine gemeinsame Symmetrieebene senkrecht zu der Stabilisatorstange mehr auf. Das Elastomerlager kann jedoch näher an dem Schenkel des Stabilisators positioniert und vorgespannt werden.

Bei der induktiven Erwärmung wird, bedingt durch die zu dem äußeren Werkzeugelement koaxial angeordnete Induktionsvorrichtung, die Stabilisatorstange im Bereich des Elastomerlagers jedoch nicht mehr vollständig, d.h. nicht ausreichend erwärmt. Dies kann dazu führen, dass die Haftung (die Haftverbindung) zwischen Stabilisatorstange und Elastomerlager nicht mehr ausreicht und die Sicherheit nicht mehr gewährleistet ist.

EP 3 213 943 A1 offenbart eine Technik, um ein Stabilisatorlager an einem Stabilisator zu fixieren.

JP 2006 290313 A offenbart ein prozessoptimiertes Herstellungsverfahren einer Stabilisatorstange mit einem Stabilisatorlager ohne dass dadurch etwaige negative Effekte auftreten.

Die Aufgabe der vorliegenden Erfindung besteht deshalb darin, ein verbessertes Konzept für das Haften eines Elastomerlagers an eine Stabilisatorstange zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen eine Vorrichtung zum Haften eines Elastomerlagers an eine Stabilisatorstange für ein Kraftfahrzeug. Die Vorrichtung umfasst eine Spanneinheit, eine erste und eine zweite Induktionsspule sowie eine erste und eine zweite Stromversorgungseinheit. Die Spanneinheit umfasst eine Aufnahme für die Stabilisatorstange und das Elastomerlager. Ferner ist die Spanneinheit ausgebildet, das Elastomerlager mit der Stabilisatorstange zu verspannen, d.h. einen Druck zwischen Elastomerlager und Stabilisatorstange zu erzeugen, so dass das Elastomerlager an die Stabilisatorstange gepresst wird.

Das Elastomerlager ist bevorzugt geschlitzt oder mehrteilig, insbesondere zweiteilig aufgebaut. So kann das Elastomerlager die Stabilisatorstange vollständig umschließen, d.h. einen Ring um die Stabilisatorstange bilden, ohne axial über die Stabilisatorstange geschoben zu werden. Der Haftprozess erzielt dann einen Stoffschluss zwischen Elastomerlager und Stabilisatorstange an der Umfangsfläche der Stabilisatorstange. Das Elastomerlager über die gebogene Stabilisatorstange zu schieben ist aufgrund des bzw. der Biegeradien und der bereits umgeformten Anschraubenden nicht praktikabel.

Die erste und die zweite Induktionsspule sind im Betrieb beispielsweise beidseitig der Aufnahme für die Stabilisatorstange und das Elastomerlager angeordnet. Beidseitig meint, dass die Induktionsspulen lateral, bevorzugt gegenüberliegend, angeordnet sind. In einem anderen Ausführungsbeispiel sind die erste und die zweite Induktionsspule im Betrieb außerhalb einer lateralen Projektion der Aufnahme für die Stabilisatorstange und das Elastomerlager angeordnet. Dies ermöglicht es, auch Elastomerlager zu erwärmen, die nicht ausschließlich aus einem nichtleitenden Materialgemisch bestehen, sondern zumindest ein leitendes Material, beispielsweise einen Stahlkern, aufweisen. Durch den Stahlkern, beispielsweise ein Stahlblech, kann eine Steifigkeit des Elastomerlagers eingestellt werden. Der Begriff Induktionsspule umfasst auch eine Induktionsschleife, also eine Spule mit nur einer Windung.

Die erste Stromversorgungseinheit ist ausgebildet, einen ersten Wechselstromfluss durch die erste Induktionsspule zu erzeugen. Die zweite Stromversorgungseinheit ist ausgebildet, einen zweiten Wechselstromfluss durch die zweite Induktionsspule zu erzeugen, wobei der erste Wechselstromfluss im Wesentlichen gleichphasig oder gegenphasig zu dem zweiten Wechselstromfluss ist. Durch den Wechselstromfluss durch die Induktionsspulen können dieselben die zwischen den Induktionsspulen liegende, in der Spanneinheit aufgenommene, Stabilisatorstange erhitzen.

Die beiden Induktionsspulen sind dann im Betrieb, wenn diese die Stabilisatorstange induktiv aufheizen sollen. Die Induktionsspulen heizen die Stabilisatorstange dann auf, wenn diese beidseitig der Stabilisatorstange angeordnet sind und der Wechselstromfluss durch die Induktionsspulen erfolgt. Typischerweise werden die Induktionsspulen zunächst relativ zu der Stabilisatorstange oder dem Elastomerlager in Position gebracht. Insbesondere können die Induktionsspulen über Aussparungen in den äußeren Werkzeugelementen in diese einfahren, um in Position gebracht zu werden. Beispielsweise sind die Induktionsspulen dann zumindest teilweise beidseitig der Aufnahme des Elastomerlagers angeordnet. Für den Aufheizvorgang wird daraufhin der Wechselstromfluss durch die Induktionsspulen gestartet und für die Dauer des Aufheizvorgangs aufrechterhalten.

Die Vorrichtung ist ferner ausgebildet, einen weiteren Aufheizvorgang der Stabilisatorstange auszuführen. Hierfür kann die Vorrichtung in zwei verschiedenen Ausgestaltungen ausgeführt sein.

In einer ersten Ausgestaltung (a)) weist die Vorrichtung eine Bewegungseinheit sowie eine dritte und vierte Induktionsspule als auch eine dritte und vierte Stromversorgungseinheit auf. Die Bewegungseinheit ist ausgebildet, die Spanneinheit relativ zu der dritten Induktionsspule und der vierten Induktionsspule zu bewegen, so dass die dritte und die vierte Induktionsspule im Betrieb beidseitig der Aufnahme für die Stabilisatorstange und das Elastomerlager angeordnet sind. Die Bewegungseinheit kann eine Antriebseinheit aufweisen, insbesondere ein Förderband oder einen Roboter umfassen. Die Bewegungseinheit kann ferner die Abwesenheit einer Antriebseinheit aufweisen. In diesem Fall kann die Bewegungseinheit die Bewegung der Spanneinheit unterstützen, beispielsweise indem ein Reibungswiderstand minimiert wird. Dies kann mittels eines Rollenförderbands erfolgen. Zwar ist hier ohne maschinelle Krafteinwirkung die Muskelkraft eines Bedieners nötig, um die Stabilisatorstange, zumindest initial, zu bewegen. Die Kraft, die der Bediener aufwenden braucht ist jedoch nur minimal im Vergleich zum Krafteinsatz wenn er die Stabilisatorstange tragen oder über eine Platte ziehen müsste.

Die dritte Stromversorgungseinheit ist ausgebildet einen dritten Wechselstromfluss durch die dritte Induktionsspule zu erzeugen und einer vierten Stromversorgungseinheit ist ausgebildet, einen vierten Wechselstromfluss durch die vierte Induktionsspule zu erzeugen. Die dritte Stromversorgungseinheit erzeugt den dritten Wechselstromfluss gleichphasig zu dem vierten Wechselstromfluss, wenn der erste Wechselstromfluss gegenphasig zu dem zweiten Wechselstromfluss ist und die dritte Stromversorgungseinheit erzeugt den dritten Wechselstromfluss gegenphasig zu dem vierten Wechselstromfluss, wenn der erste Wechselstromfluss gleichphasig zu dem zweiten Wechselstromfluss ist. Anders ausgedrückt, erfolgt eine Phasenumkehr, d.h. ein Polaritätswechsel des Wechselstromflusses zwischen der ersten und zweiten Induktionsspule im Vergleich zur dritten und vierten Induktionsspule. Die Ausführungen dieser Offenbarung zu der ersten und der zweiten Induktionsspule gelten entsprechend auch für die dritte und die vierte Induktionsspule. Es ist ferner möglich, dass die dritte und die vierte Induktionsspule identisch mit der ersten und der zweiten Induktionsspule sind. Die erste und die zweite Induktionsspule sowie die dritte und die vierte Induktionsspule sind jedoch separate Spulen.

In einer zweiten Ausgestaltung ist die zweite Stromversorgungseinheit ausgebildet, die Phasenumkehr der zweiten Wechselspannung vorzunehmen. Die Phasenumkehr kann auch als Phasenwechsel, Phasenverschiebung um (im Wesentlichen) 180°, Umpolung oder Polaritätswechsel bezeichnet werden. Das heißt, die beiden Induktionsspulen werden einmal mit einem gleichphasiger und einmal mit einem gegenphasigen Wechselstrom gespeist. Es kann dann eine Phasenumkehr der Wechselspannung von einer der beiden Induktionsspulen während des Aufheizens stattfinden. Die Phasenumkehr kann beispielsweise durch Umpolen, d.h. Vertauschen, der Anschlüsse einer der Wechselspannungsquellen an der zugehörigen Induktionsspule erfolgen.

In anderen Worten ist die erste und die zweite Stromversorgungseinheit ausgebildet, den ersten Wechselstromfluss und den zweiten Wechselstromfluss derart zu erzeugen, dass zu einer überwiegenden Zeit eine Stromflussrichtung in der Leiterbahn der ersten Induktionsspule (erste Leiterbahn) entweder in die gleiche Richtung zeigt oder in die entgegengesetzte Richtung zeigt wie die Stromflussrichtung in der Leiterbahn der zweiten Induktionsspule (zweite Leiterbahn). Hier können zueinander parallele Abschnitte der Leiterbahn der ersten und der zweiten Induktionsspule, insbesondere parallele Abschnitte, die in einer Ebene senkrecht zu der Stabilisatorstange angeordnet sind, betrachtet werden.

Die dritte und die vierte Stromversorgungseinheit sind ausgebildet, den dritten Wechselstromfluss und den vierten Wechselstromfluss derart zu erzeugen, dass zu einer überwiegenden Zeit die Stromflussrichtung in der Leiterbahn der dritten Induktionsspule (dritte Leiterbahn) in die gleiche Richtung zeigt wie die Stromflussrichtung in der Leiterbahn der vierten Induktionsspule (vierte Leiterbahn), wenn die Stromflussrichtung der ersten Leiterbahn und der zweiten Leiterbahn in die entgegengesetzte Richtung zeigen (bzw. gezeigt haben). Oder den dritten und den vierten Wechselstromfluss in die entgegengesetzte Richtung derart zu erzeugen, dass zu einer überwiegenden Zeit eine Stromflussrichtung in der dritten Leiterbahn in die entgegengesetzte Richtung zeigt wie die Stromflussrichtung in der vierten Leiterbahn, wenn die Stromflussrichtung der ersten und der zweiten Leiterbahn in die gleiche Richtung zeigen (bzw. gezeigt haben). Hier können ebenfalls zueinander parallele Abschnitte der dritten und der vierten Leiterbahn, insbesondere parallele Abschnitte, die in einer Ebene senkrecht zu der Stabilisatorstange angeordnet sind, betrachtet werden. Entsprechend der zweiten Ausgestaltung kann auch in dieser Betrachtung eine Phasenumkehr der zweiten Wechselspannung vorgenommen werden.

Idee ist es somit, zwei Aufheizvorgänge in der Vorrichtung zu implementieren. Die zwei Aufheizvorgänge zeichnen sich dadurch aus, dass die beiden Induktionsspulen, die jeweils für das Aufheizen der Stabilisatorstange zuständig sind, mit gegeneinander phasenumgekehrten Wechselströmen betrieben werden. Dies wird dadurch erreicht, dass bei einem Wechselstrom eine Phasenumkehr durchgeführt wird. Für die beiden Aufheizvorgänge können jeweils die gleichen Induktionsspulen verwendet werden. Dann kann die Phasenumkehr rein elektrisch erfolgen. Ferner kann für den Aufheizvorgang und für den weiteren Aufheizvorgang auch unterschiedliche Induktionsspulen verwendet werden. In diesem Fall erfolgt eine mechanische Umpositionierung der Spanneinheit zwischen den beiden Aufheizvorgängen.

Durch die beiden Aufheizvorgänge mit unterschiedlicher Phasenlage wird mit den gleichen Induktionsspulen ein größerer Bereich der Stabilisatorstange erhitzt als mit einem Aufheizvorgang ohne Wechsel der Phasenlage unter Verwendung der gleichen Induktionsspulen. Für diesen Vergleich wird für die beiden Aufheizvorgänge zusammen die gleiche effektive Heizdauer angesetzt, wie für den einen bekannten einzigen Aufheizvorgang. Als effektive Heizdauer wird die Zeit des Aufheizens der Stabilisatorstange verstanden. Eine Zeitdauer für die Phasenumkehr bzw. den Transport von einem Induktionsspulenpaar zu dem nächsten wird hierbei jedoch nicht berücksichtigt. Auch eine signifikante Erhöhung der Aufheizzeit bei dem einzigen Aufheizvorgang resultiert nicht in einer Vergrößerung des Heizbereichs der Stabilisatorstange wie sie durch die Änderung der Phasenlage erreicht wird.

In Ausführungsbeispielen umfasst die Vorrichtung auch das Elastomerlager und die Stabilisatorstange, während das Elastomerlager und die Stabilisatorstange typischerweise nicht Teil der Vorrichtung sind.

In weiteren Ausführungsbeispielen ist die erste und die zweite Induktionsspule ausgebildet, ein Wechselmagnetfeld in der Stabilisatorstange zu erzeugen. Durch das Wechselmagentfeld (insbesondere die dadurch entstehenden Wirbelstromverluste) wird die Stabilisatorstange erhitzt. Durch das Erhitzen wird eine (insbesondere chemische) Reaktion eines Haftvermittlers erzeugt. Der Haftvermittler ist zwischen dem Elastomerlager und der Stabilisatorstange appliziert (d.h. aufgetragen), so dass das Elastomerlager nach dem Abkühlen der Stabilisatorstange an der Stabilisatorstange haftet. Dieser Vorgang kann als induktives Erhitzen bezeichnet werden.

In weiteren Ausführungsbeispielen steht die Spanneinheit axial über die Aufnahme für das Elastomerlager über. In weiteren Ausführungsbeispielen ist der Formeinsatz und/oder die Aufnahme für das Elastomerlager axial aus der Mitte verschoben. Axial bezieht sich auf die Orientierung, in die die Stabilisatorstange in die Spanneinheit eingespannt wird. Auch bei einer Kombination beider Ausführungsbeispiele ist es mit der offenbarten Änderung der Phasenlage möglich, einen so großen Bereich der Stabilisatorstange zu erhitzen, dass das Haftmittel die erforderliche Temperatur erreicht, um zu reagieren und seine Haftwirkung zu entfalten.

In Ausführungsbeispielen ist die Bewegungseinheit ausgebildet, das Bewegen in Alternative a) bzw. ist die zweite Stromversorgungseinheit ausgebildet, die Phasenumkehr in Alternative b) auszuführen, wenn zumindest in einem Punkt der Stabilisatorstange, eine vorgegebene Temperatur erreicht ist, insbesondere wobei die vorgegebene Temperatur zwischen 110°C und 270°C, vorzugsweise zwischen 130°C und 250°C, besonders bevorzugt zwischen 160°C und 230°C liegt. Zur Temperaturmessung kann die Vorrichtung, auch unabhängig von dem beschriebenen Ausführungsbeispiel, ein Thermometer, insbesondere ein Infrarotthermometer, aufweisen. Die vorgegebene Temperatur ist derart zu wählen, dass das Haftmittel reagiert. Somit kann ein Automatismus für das Erhitzen der Stabilisatorstange implementiert werden, der temperaturabhängig den Heizvorgang (d.h. den Stromfluss durch die Induktionsspulen) beendet.

In weiteren Ausführungsbeispielen ist die Bewegungseinheit ausgebildet, das Bewegen in Alternative a) bzw. ist die zweite Stromversorgungseinheit ausgebildet, die Phasenumkehr in Alternative b) auszuführen, nachdem für eine vorgegebene Zeitdauer ein gleichzeitiger Wechselstromfluss des ersten und des zweiten Wechselstroms erfolgt ist, d.h. die Stabilisatorstange erhitzt wird. Somit kann der Heizvorgang zeitabhängig beendet werden. In Ausführungsbeispielen kann die Zeitdauer des Aufheizens für Vollstabilisatoren größer sein als die Zeitdauer des Aufheizens für Rohrstabilisatoren.

Ferner ist ein analoges Verfahren zum Haften eines Elastomerlagers an eine Stabilisatorstange für ein Kraftfahrzeug mit folgenden Schritten offenbart: -Verspannen der Stabilisatorstange mit dem Elastomerlager; -Bereitstellen einer ersten Induktionsspule und einer zweiten Induktionsspule, insbesondere anordnen derselben im Betrieb beidseitig neben der Stabilisatorstange und dem Elastomerlager oder im Betrieb außerhalb einer lateralen Projektion der Aufnahme für die Stabilisatorstange und das Elastomerlager; -Erzeugen eines ersten Wechselstromflusses durch die erste Induktionsspule; -Erzeugen eines zweiten Wechselstromflusses durch die zweite Induktionsspule, wobei der erste Wechselstromfluss und der zweite Wechselstromfluss gleichphasig oder gegenphasig erzeugt werden und die Stabilisatorstange induktiv erhitzen; und wobei die Stabilisatorstange anschließend entweder zwei Induktionsspulen ausgesetzt wird, deren Wechselstromfluss gegenphasig ist, wenn der erste und der zweite Wechselstromfluss gleichphasig sind oder zwei Induktionsspulen ausgesetzt wird, deren Wechselstromfluss gleichphasig ist, wenn der erste und der zweite Wechselstromfluss gegenphasig ist.

Darüber hinaus ist in dieser allgemeinen Form nicht zur Erfindung gehörig eine weitere Vorrichtung zum Haften des Elastomerlagers an die Stabilisatorstange für ein Kraftfahrzeug offenbart. Die Vorrichtung umfasst die Spanneinheit, die die Aufnahme für die Stabilisatorstange und das Elastomerlager umfasst und ausgebildet ist, das Elastomerlager mit der Stabilisatorstange zu verspannen. Ferner umfasst die Vorrichtung die erste Induktionsspule und die zweite Induktionsspule, die bevorzugt beidseitig (axial betrachtet) neben der Stabilisatorstange angeordnet sind, wenn die Stabilisatorstange in der Spanneinheit mit dem Elastomerlager verspannt ist. Die Stromversorgungseinheit ist ausgebildet, den ersten Wechselstromfluss durch die erste Induktionsspule zu erzeugen und die zweite Stromversorgungseinheit ist ausgebildet, den zweiten Wechselstromfluss durch die zweite Induktionsspule zu erzeugen. Hierbei ist die Phasenlage des ersten Wechselstromflusses und des zweiten Wechselstromflusses so gewählt, dass ein Stromfluss in gegenüberliegenden Abschnitten der ersten und der zweiten Induktionsspule in die gleiche Richtung zeigt. Die gegenüberliegenden Abschnitte sind insbesondere derart angeordnet, dass diese lateral gegenüberliegend angeordnet sind. Ferner ist die erste und die zweite Induktionsspule im Betrieb außerhalb einer lateralen Projektion der Aufnahme für die Stabilisatorstange und das Elastomerlager angeordnet.

Ferner ist in dieser allgemeinen Form nicht zur Erfindung gehörig ein weiteres Verfahren zum Haften des Elastomerlagers an die Stabilisatorstange für ein Kraftfahrzeug mit folgenden Schritten offenbart: - Verspannen des Elastomerlagers mit der Stabilisatorstange mittels der Spanneinheit, die die Aufnahme für die Stabilisatorstange und das Elastomerlager umfasst; - Anordnen der ersten Induktionsspule und der zweiten Induktionsspule im Betrieb außerhalb einer lateralen Projektion der Aufnahme für die Stabilisatorstange und das Elastomerlager; - Erzeugen des ersten Wechselstromflusses durch die erste Induktionsspule und eines zweiten Wechselstromflusses durch die zweite Induktionsspule, wobei die Phasenlage des ersten Wechselstromflusses und des zweiten Wechselstromflusses so gewählt ist, dass ein Stromfluss in gegenüberliegenden Abschnitten der ersten und der zweiten Induktionsspule in die gleiche Richtung zeigt.

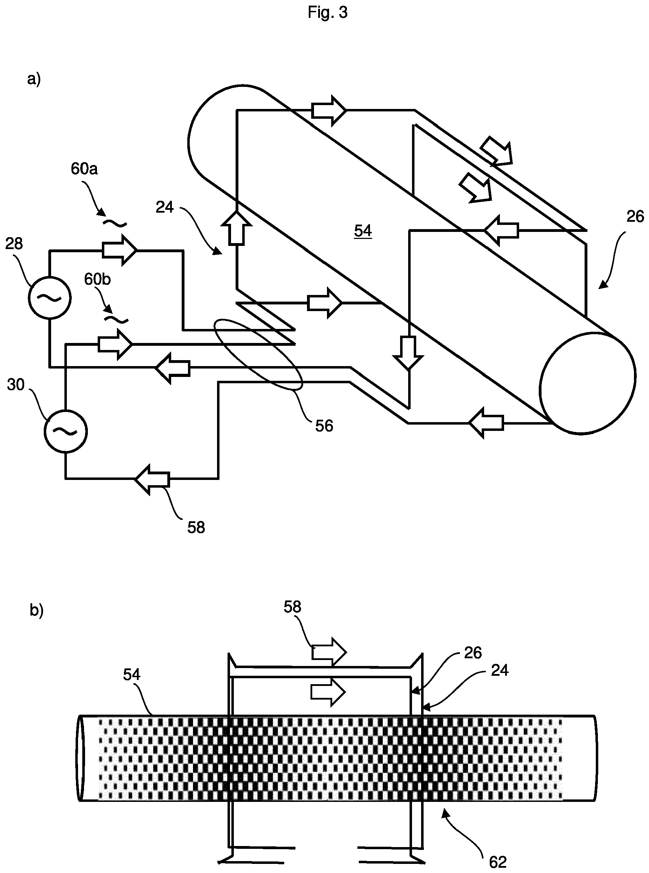

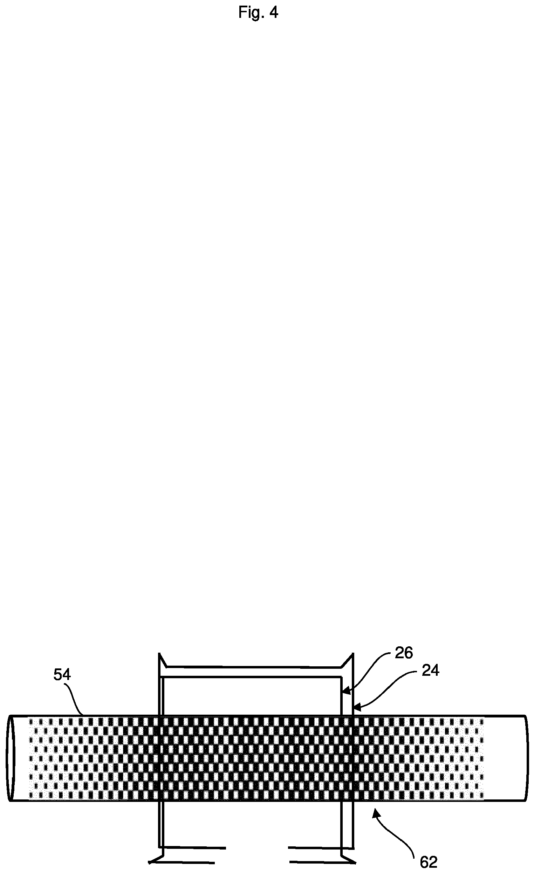

Es sei angemerkt, dass beide hier offenbarte Vorrichtungen die gleichen räumlich körperlichen Merkmale aufweisen und im Wesentlichen nur in der Anordnung der Elektroden und der Art des Stromflusses, der an die Anordnung der Elektroden angepasst ist, unterscheiden. Das heißt, wird das elektrische Feld der Elektroden so erzeugt, dass dieses durch das Elastomerlager hindurchtritt, ist es vorteilhaft den Phasenwechsel der Wechselstromflüsse vorzunehmen, um eine möglichst gleichmäßige Erwärmung der Stabilisatorstange zu erhalten, die auch über die Abmessungen der Elektroden hinausgeht (s. Fig. 4). Tritt das elektrische Feld der Elektroden nicht durch das Elastomerlager hindurch, da die Elektroden seitlich (d.h. axial) versetzt zu der Spanneinheit oder zumindest zu der Aufnahme für das Elastomerlager angeordnet sind, ist es vorteilhaft, einen möglichst großen Bereich der Stabilisatorstange außerhalb der Abmessungen der Elektroden zu erhitzen (s. Fig. 3b). Innerhalb der Abmessungen der Elektroden braucht dann kein Haftmittel erwärmt zu werden, so dass auf die Erhitzung verzichtet werden kann. Allerdings kann es sein, dass sich die Stabilisatorstange auch außerhalb der Aufnahme für das Elastomerlager stärker erhitzt, wenn der Bereich innerhalb der Abmessungen der Elektroden ebenfalls erhitzt wird, so dass die Phasenumkehr auch hier vorteilhaft sein kann.

Die Beschreibung der Merkmale ist demnach auf beide Vorrichtungen, und somit auch auf beide Verfahren, zutreffend, wenn nicht gerade die Unterschiede herausgestellt werden.

Bevorzugte Ausführungsbeispiele der vorliegenden Erfindung werden nachfolgend Bezug nehmend auf die beiliegenden Zeichnungen erläutert. Es zeigen:
Fig. 1: eine schematische perspektivische Explosionsdarstellung einer Vorrichtung zum Haften eines Elastomerlagers an eine Stabilisatorstange für ein Kraftfahrzeug;
Fig. 2: eine schematische Darstellung einer Stabilisatorstange mit zwei Induktionsspulen, die mit jeweils einem Wechselstrom durchflossen werden, wobei die Wechselströme eine erste Phasenlage zueinander aufweisen, wobei Fig. 2a eine schematische perspektivische Darstellung ist und Fig. 2b eine minimal perspektivische Seitenansicht mit Wärmeverteilung in der Stabilisatorstange;
Fig. 3: eine schematische Darstellung einer Stabilisatorstange mit zwei Induktionsspulen, die mit jeweils einem Wechselstrom durchflossen werden, wobei die Wechselströme eine zweite Phasenlage zueinander aufweisen, wobei Fig. 3a eine schematische perspektivische Darstellung ist und Fig. 3b eine minimal perspektivische Seitenansicht mit Wärmeverteilung in der Stabilisatorstange; und
Fig. 4: eine schematische perspektivische Seitenansicht einer resultierenden Wärmeverteilung in der Stabilisatorstange basierend auf einer Stabilisatorstange die konsekutiv den Induktionsspulen mit erster und mit zweiter Phasenlage zueinander ausgesetzt ist;
Fig. 5: eine schematische perspektivische Seitenansicht der Vorrichtung aus Fig. 1 mit einer alternativen Anordnung der Induktionsspulen in einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

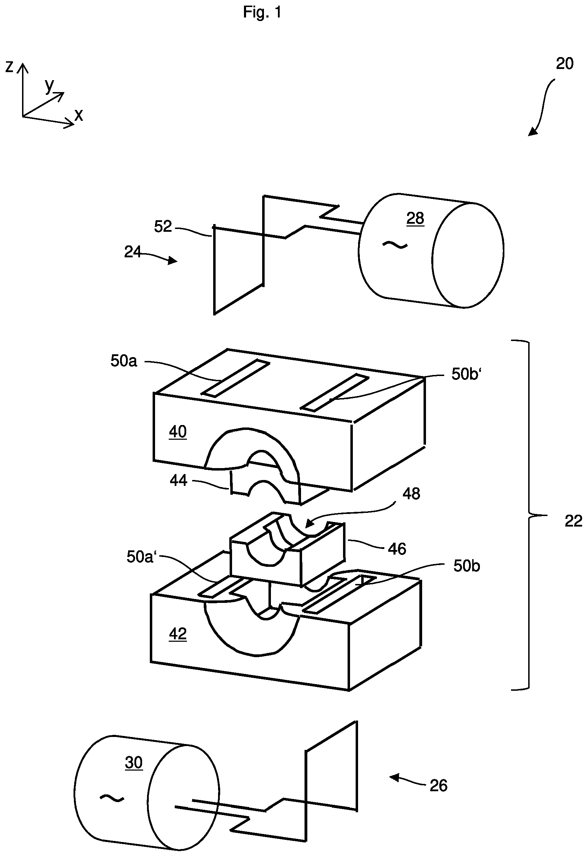

Fig. 1 zeigt eine schematische Explosionsdarstellung einer Vorrichtung 20 zum Haften eines Elastomerlagers an eine Stabilisatorstange. Die Vorrichtung umfasst eine Spanneinheit 22, eine erste Induktionsspule 24, eine zweite Induktionsspule 26, eine erste Stromversorgungseinheit 28 sowie eine zweite Stromversorgungseinheit 30. Die Spanneinheit 22 ist modular dargestellt. Sie weist zwei (universelle) äußere Werkzeugelemente 40, 42 sowie zwei (spezifische) Formeinsätze 44, 46 auf.

Die äußeren Werkzeugelemente 40, 42 weisen jeweils eine Aussparung auf, in die der zugehörige individuelle Formeinsatz 44, 46 eingesetzt wird. Der individuelle Formeinsatz 46 weist eine Aufnahme 48 (der individuelle Formeinsatz 44 ein entsprechendes Gegenstück) für das zu verspannende Elastomerlager sowie die Stabilisatorstange auf.

Die Stromversorgungseinheiten 28, 30 können die zugehörigen Induktionsspulen 24, 26 mit einem Wechselstrom beaufschlagen. Zumindest eine der beiden Stromversorgungseinheiten kann ferner eine Phasenumkehr des Wechselstroms vornehmen. Alternativ ist eine Bewegungseinheit vorgesehen, die die Spanneinheit mit verspannter Stabilisatorstange und Elastomerlager zu einer dritten und vierten Induktionsspule bewegt, von denen eine gleichphasig und eine phasenumgekehrt im Vergleich zu der ersten und der zweiten Induktionsspule mit dem Wechselstrom beaufschlagt werden.

Die erste Induktionsspule 24 kann durch einen Schlitz 50a in das erste äußere Werkzeugelement 40 parallel zu der Stabilisatorstange in die Spanneinheit 22 eingeführt werden. Optional kann ein entsprechender Schlitz 50a' auch noch in dem zweiten äußeren Werkzeugelement 42 vorgesehen sein, wenn die erste Induktionsspule 24 eine entsprechende Größe aufweist. Analog kann auch die zweite Induktionsspule 26 durch entsprechende weitere Schlitze, 50b und optional 50b` in die Spanneinheit 22 eingeführt werden.

Die Induktionsspule kann eine Leiterbahn aufweisen, deren wirksame Länge in drei verschiedenen Dimensionen (x,y,z) ausgerichtet ist. Alternativ kann die erste und die zweite Spule 24, 26 auch als Spulen in zwei Dimensionen, beispielsweise sogenannte Helmholtzspulen, ausgebildet sein. Dann können die vorgesehenen Schlitze in den äußeren Werkzeugelementen obsolet sein.

Im verspannten Zustand kann die erste und die zweite Induktionsspule 24, 26 beidseitig, d.h. in der x-z-Ebene neben bzw. lateral zu, der Aufnahme für die Stabilisatorstange und das Elastomerlager angeordnet sein. Ferner kann die Spanneinheit 22 axial, d.h. in y-Richtung, beidseitig über die Aufnahme für das Elastomerlager überstehen. Ferner kann die Aufnahme 48 des zweiten Formeinsatzes 46 für das Elastomerlager, wie in Fig. 1 dargestellt, axial, d.h. in y-Richtung, aus der Mitte verschoben sein. Gleiches gilt natürlich auch für die korrespondierende, nicht sichtbare, Aufnahme des ersten Formeinsatzes 44.

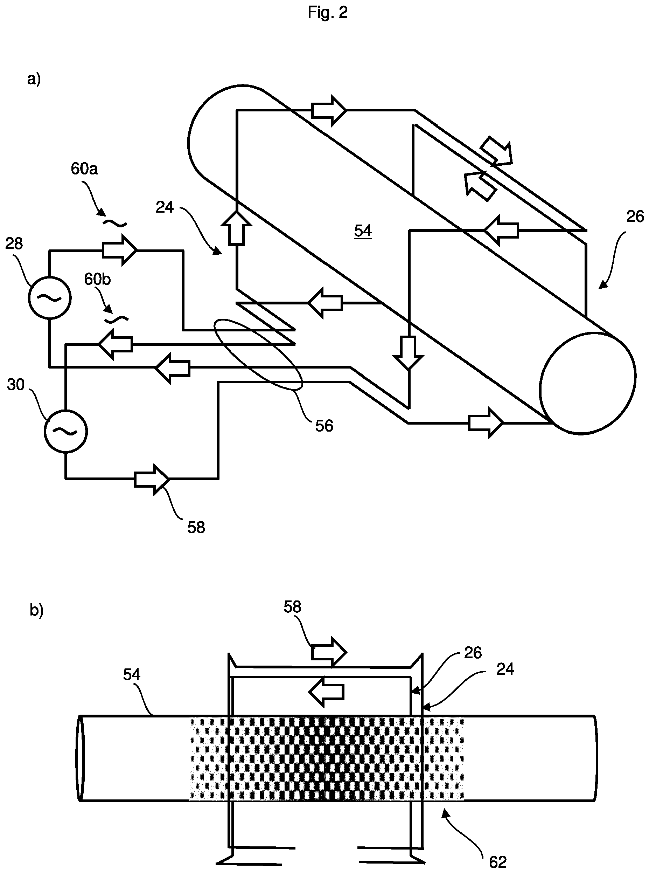

Fig. 2a und Fig. 3a zeigen eine perspektivische schematische Darstellung einer Stabilisatorstange 54. Aus Gründen der Übersichtlichkeit wurde hier auf die Darstellung der Spanneinheit sowie des Elastomerlagers verzichtet. Beidseitig der Stabilisatorstange 54 sind die Induktionsspulen 24, 26 angeordnet. Über Zuleitungen 56 können die Induktionsspulen von jeweils einer Stromversorgungseinheit 28, 30 mit einem Wechselstrom beaufschlagt werden. Dass es sich bei den Stromversorgungseinheiten 28, 30 um Wechselstromquellen bzw. Wechselspannungsquellen handeln kann, ist durch das Sinussymbol 60a, 60b angedeutet. Das Sinussymbol zeigt ferner die Phasenlage des Wechselstroms durch die erste und die zweite Induktionsspule an. Pfeile 58 zeigen die Stromflussrichtung zu einem Zeitpunkt t an.

Fig. 2a unterscheidet sich nun von Fig. 3a dahingehend, dass die Wechselströme in Fig. 2a gegenphasig sind und in Fig. 3a gleichphasig. Daraus resultiert in der gezeigten Anordnung der Induktionsspulen ein Stromfluss zum Zeitpunkt t, der in parallelen Abschnitten der Leiterbahn der ersten und der zweiten Induktionsspule entgegengesetzt verlaufen. Betrachtet werden hierbei die bevorzugt die Abschnitte de Leiterbahn, die in einer Ebene liegen, deren Normalenvektor parallel zu der Stabilisatorstange verläuft. Um den gleichen Stromfluss zu erhalten ist es bei einer anderen (nicht gezeigten) Anordnung der Induktionsspulen auch möglich, dass die Induktionsspulen mit einem gleichphasigen Wechselstrom gespeist werden. Im Unterschied hierzu sind die Wechselströme in Fig. 3a gleichphasig. Daraus resultiert in der gezeigten Anordnung der Induktionsspulen ein Stromfluss zum Zeitpunkt t, der in parallelen Abschnitten der Leiterbahn der ersten und der zweiten Induktionsspule in die gleiche Richtung verlaufen. Betrachtet werden hierbei die bevorzugt die Abschnitte der Leiterbahn, die in einer Ebene liegen, deren Normalenvektor parallel zu der Stabilisatorstange verläuft.

Fig. 2b und 3b zeigen jeweils die durch den Wechelstromfluss resultierende Wärmeverteilung anhand einer Schraffur. Je dunkler die Schraffur desto höher ist die Temperatur. In Fig. 2b ist deutlich zu erkennen, dass die Temperatur, axial betrachtet, mittig zwischen den der ersten bzw. der zweiten Induktionsspule am größten ist. Ferner reicht die Erwärmung der Stabilisatorstange seitlich, d.h. axial, kaum über die seitlichen Abschnitte der Leiterbahn hinaus. Wie in Fig. Fig 3b dargestellt ist die Temperaturverteilung jedoch bei einer Phasenumkehr einer der beiden Wechselspannungen in der Region der seitlichen Abschnitte der Leiterbahn am größten. Ferner wird auch ein signifikanter Bereich der Stabilisatorstange seitlich außerhalb der Induktionsspulen erhitzt. Wird die Stabilisatorstange den Wechselspannungen einmal mit gleicher und einmal mit entgegengesetzter Phasenlage ausgesetzt, ergibt sich der Temperaturverlauf aus der Überlagerung der in Fig. 2b und Fig. 3b dargestellten Temperaturverläufe. Das heißt, dass die Erwärmbreite in axialer Richtung des Stabilisators größer ist, als die axiale Ausdehnung der Induktionsspulen und die Temperaturverteilung durch die in Fig. 4 schematisch gezeigte Überlagerung der in Fig. 2b und Fig. 3b dargestellten Temperaturverläufe geringere Temperaturdifferenzen aufweist.

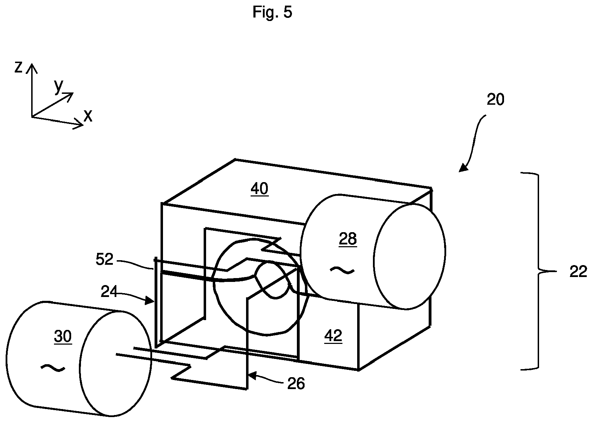

Fig. 5 zeigt eine schematische perspektivische Seitenansicht der Vorrichtung 20 aus Fig. 1 mit einer alternativen Anordnung der Induktionsspulen 24, 26 in einem Ausführungsbeispiel. Hier sind die erste und die zweite Induktionsspule 24, 26 im Betrieb außerhalb einer lateralen Projektion der Aufnahme für die Stabilisatorstange und das Elastomerlager angeordnet. In anderen Worten ist die erste und die zweite Induktionsspule axial neben der Spanneinheit 22 angeordnet. Im Gegensatz dazu sind in dem in Fig. 1 offenbarten Ausführungsbeispiel die erste und die zweite Induktionsspule 24, 26 beidseitig neben der Aufnahme für die Stabilisatorstange und das Elastomerlager angeordnet und somit innerhalb einer lateralen Projektion der Aufnahme für die Stabilisatorstange und das Elastomerlager.

Aus den in Fig. 2b, Fig. 3b und Fig. 4 gezeigten Temperaturverläufen ist ersichtlich, dass sich die Stabilisatorstange durch die vorgeschlagene Erhitzung mit sich unterscheidenden Phasenlagen der die Induktionsspulen durchfließenden Wechselströme auch außerhalb der Induktionsspulen erhitzt wird. Somit erhitzt sich die Stabilisatorstange auch innerhalb der Spanneinheit 22, insbesondere innerhalb der lateralen Projektion der Aufnahme für die Stabilisatorstange und das Elastomerlager. Dies ist vorteilhaft, damit das Haftmittel zum Verbinden des Elastomerlagers mit der Stabilisatorstange reagiert und seine Haftwirkung entfaltet. Ferner ist es jedoch auch ausreichen, dass entsprechend der Darstellung in Fig. 3a und Fig. 3b eine Phasenlage des ersten Wechselstromflusses und des zweiten Wechselstromflusses so gewählt ist, dass ein Stromfluss in gegenüberliegenden Abschnitten der ersten und der zweiten Induktionsspule in die gleiche Richtung zeigt. Dies ist ausreichend, da der mittlere Bereich zwischen den Induktionsspulen nicht oder zumindest nicht so stark erhitzt werden braucht wie die Bereiche außerhalb der Induktionsspulen.

Sofern es die Geometrie der Stabilisatorstange zulässt, ist es vorteilhaft, auch auf der den beiden Induktionsspulen gegenüberliegenden Seite der Spanneinheit 22 weitere gleichartige Induktionsspulen anzuordnen. So ist es möglich, eine gleichmäßigere Wärmeverteilung der Stabilisatorstange unter dem Elastomerlager zu erhalten.

Die Begriffe lateral und axial beziehen sich jeweils auf die, beispielsweise durch die Form der Aufnahme resultierende, Orientierung der Stabilisatorstange wenn diese in der Vorrichtung verspannt ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Vorrichtung
- 22: Spanneinheit
- 24: erste Induktionsspule
- 26: zweite Induktionsspule
- 28: erste Stromversorgungseinheit
- 30: zweite Stromversorgungseinheit
- 40: erstes äußeres Werkzeugelement
- 42: zweites äußeres Werkzeugelement
- 44: erster Formeinsatz
- 46: zweiter Formeinsatz
- 48: Aufnahme für das zu verspannende Elastomerlager und die Stabilisatorstange
- 50: Schlitze
- 52: Leiterbahn
- 54: Stabilisatorstange
- 56: Zuleitung
- 58: Pfeile, die die Stromflussrichtung anzeigen
- 60a, b: Sinussymbol
- 62: Wärmeverteilung

## Patentansprüche

1. Vorrichtung zum Haften eines Elastomerlagers an eine Stabilisatorstange (54) für ein Kraftfahrzeug mit folgenden Merkmalen:
einer Spanneinheit (22), die eine Aufnahme (48) für die Stabilisatorstange (54) und das Elastomerlager umfasst und ausgebildet ist, das Elastomerlager mit der Stabilisatorstange (54) zu verspannen;
einer ersten Induktionsspule (24) und einer zweiten Induktionsspule (26);
einer ersten Stromversorgungseinheit (28), die ausgebildet ist, einen ersten Wechselstromfluss durch die erste Induktionsspule (24) zu erzeugen, **dadurch gekennzeichnet, dass** eine zweite Stromversorgungseinheit (30) ausgebildet ist, einen zweiten Wechselstromfluss durch die zweite Induktionsspule (26) zu erzeugen, wobei der erste Wechselstromfluss gleichphasig oder gegenphasig zu dem zweiten Wechselstromfluss ist, insbesondere wobei die erste und die zweite Induktionsspule ausgebildet sind, die in der Spanneinheit aufgenommene Stabilisatorstange zu erhitzen;
und
a) eine Bewegungseinheit ausgebildet ist, die Spanneinheit (22) relativ zu einer dritten Induktionsspule und einer vierten Induktionsspule zu bewegen oder eine Bewegung zu unterstützen, wobei die dritte und die vierte Induktionsspule im Betrieb beidseitig der Aufnahme (48) für die Stabilisatorstange (54) und das Elastomerlager angeordnet sind; und eine dritte Stromversorgungseinheit ausgebildet ist, einen dritten Wechselstromfluss durch die dritte Induktionsspule zu erzeugen und eine vierte Stromversorgungseinheit ausgebildet ist, einen vierten Wechselstromfluss durch die vierte Induktionsspule zu erzeugen, wobei der dritte Wechselstromfluss gleichphasig zu dem vierten Wechselstromfluss ist wenn der erste Wechselstromfluss gegenphasig zu dem zweiten Wechselstromfluss ist und wobei der dritte Wechselstromfluss gegenphasig zu dem vierten Wechselstromfluss ist wenn der erste Wechselstromfluss gleichphasig zu dem zweiten Wechselstromfluss ist;
oder
b) die zweite Stromversorgungseinheit (30) ausgebildet ist, eine Phasenumkehr der zweiten Wechselspannung vorzunehmen.

2. Vorrichtung (20) gemäß Anspruch 1,
wobei die Vorrichtung das Elastomerlager und die Stabilisatorstange (54) umfasst.

3. Vorrichtung (20) gemäß einem der vorherigen Ansprüche,
wobei die erste und die zweite Induktionsspule (24, 26) ausgebildet sind, ein Wechselmagnetfeld in der Stabilisatorstange (54) zu erzeugen, so dass die Stabilisatorstange (54) erhitzt wird, um eine Reaktion eines Haftvermittlers, der zwischen dem Elastomerlager und der Stabilisatorstange (54) appliziert ist, zu erzeugen, so dass das Elastomerlager nach dem Abkühlen der Stabilisatorstange (54) an der Stabilisatorstange (54) haftet.

4. Vorrichtung (20) gemäß einem der vorherigen Ansprüche,
wobei die Spanneinheit (22) axial über die Aufnahme (48) für das Elastomerlager übersteht.

5. Vorrichtung (20) gemäß einem der vorherigen Ansprüche,
wobei die Aufnahme (48) für das Elastomerlager axial aus der Mitte verschoben ist.

6. Vorrichtung (20) gemäß einem der vorherigen Ansprüche,
wobei die Bewegungseinheit ausgebildet ist, das Bewegen in Alternative a) oder die zweite Stromversorgungseinheit (30) ausgebildet ist, die Phasenumkehr in Alternative b) auszuführen, wenn zumindest in einem Punkt der Stabilisatorstange (54), eine vorgegebene Temperatur erreicht ist, insbesondere wobei die vorgegebene Temperatur zwischen 110°C und 270°C, bevorzugt zwischen 130°C und 250°C, besonders bevorzugt zwischen 160°C und 230°C liegt.

7. Vorrichtung (20) gemäß einem der vorherigen Ansprüche,
wobei die Bewegungseinheit ausgebildet ist, das Bewegen in Ausgestaltung a) oder die zweite Stromversorgungseinheit (30) ausgebildet ist, die Phasenumkehr in Ausgestaltung b) auszuführen, nachdem für eine vorgegebene Zeitdauer ein gleichzeitiger Wechselstromfluss des ersten und des zweiten Wechselstroms erfolgt ist.

8. Vorrichtung (20) gemäß einem der vorherigen Ansprüche,
wobei die erste und die zweite Induktionsspule im Betrieb beidseitig der Aufnahme (48) für die Stabilisatorstange (54) und das Elastomerlager angeordnet sind.

9. Vorrichtung (20) gemäß einem der vorherigen Ansprüche,
wobei die erste und die zweite Induktionsspule im Betrieb außerhalb einer lateralen Projektion der Aufnahme (48) für die Stabilisatorstange (54) und das Elastomerlager angeordnet sind.

10. Verfahren zum Haften eines Elastomerlagers an eine Stabilisatorstange (54) für ein Kraftfahrzeug mit folgenden Schritten:
- Verspannen der Stabilisatorstange (54) mit dem Elastomerlager;
- Bereitstellen einer ersten Induktionsspule (24) und einer zweiten Induktionsspule (26);
- Erzeugen eines ersten Wechselstromflusses durch die erste Induktionsspule;
- Erzeugen eines zweiten Wechselstromflusses durch die zweite Induktionsspule;**dadurch gekennzeichnet, dass**:
- der erste Wechselstromfluss und der zweite Wechselstromfluss gleichphasig oder gegenphasig erzeugt werden und die Stabilisatorstange induktiv erhitzen, und
- die Stabilisatorstange (54) anschließend entweder zwei Induktionsspulen ausgesetzt wird, deren Wechselstromfluss gegenphasig ist, wenn der erste und der zweite Wechselstromfluss gleichphasig sind oder zwei Induktionsspulen ausgesetzt wird, deren Wechselstromfluss gleichphasig ist, wenn der erste und der zweite Wechselstromfluss gegenphasig ist.

## Claims

1. A device for adhering an elastomer bearing to a stabiliser bar (54) for a motor vehicle, having the following features
a clamping unit (22) which comprises a receptacle (48) for the stabiliser bar (54) and the elastomer bearing and is designed to clamp the elastomer bearing to the stabiliser bar (54);
a first induction coil (24) and a second induction coil (26);
a first power supply unit (28) which is designed to generate a first alternating current flow through the first induction coil (24), **characterised in that** a second power supply unit (30) is designed to generate a second alternating current flow through the second induction coil (26), wherein the first alternating current flow is in phase or in antiphase with the second alternating current flow, in particular wherein the first and second induction coils are designed to heat the stabiliser bar accommodated in the tensioning unit;
and
a) a movement unit is designed to move the tensioning unit (22) relative to a third induction coil and a fourth induction coil or to support a movement, the third and fourth induction coils being arranged on both sides of the receptacle (48) for the stabiliser bar (54) and the elastomer bearing in operation; and
a third power supply unit is configured to generate a third alternating current flow through the third induction coil and a fourth power supply unit is configured to generate a fourth alternating current flow through the fourth induction coil, wherein the third alternating current flow is in phase with the fourth alternating current flow when the first alternating current flow is in phase opposition with the second alternating current flow and wherein the third alternating current flow is in phase opposition with the fourth alternating current flow when the first alternating current flow is in phase with the second alternating current flow;
or
b) the second power supply unit (30) is designed to perform a phase reversal of the second AC voltage.

2. The device (20) according to claim 1,
wherein the device comprises the elastomeric bearing and the stabiliser bar (54).

3. The device (20) according to any one of the preceding claims,
wherein the first and second induction coils (24, 26) are adapted to generate an alternating magnetic field in the stabiliser bar (54) so that the stabiliser bar (54) is heated to generate a reaction of an adhesion promoter applied between the elastomeric bearing and the stabiliser bar (54) so that the elastomeric bearing adheres to the stabiliser bar (54) after cooling of the stabiliser bar (54).

4. The device (20) according to any of the preceding claims,
wherein the clamping unit (22) projects axially beyond the receptacle (48) for the elastomer bearing.

5. The device (20) according to one of the preceding claims,
wherein the receptacle (48) for the elastomeric bearing is axially displaced from the center.

6. The device (20) according to any one of the preceding claims,
wherein the movement unit is designed to perform the movement in alternative a) or the second power supply unit (30) is designed to perform the phase reversal in alternative b) when a predetermined temperature is reached at least at one point of the stabiliser rod (54), in particular wherein the predetermined temperature is between 110°C and 270°C, preferably between 130°C and 250°C, particularly preferably between 160°C and 230°C.

7. The device (20) according to one of the preceding claims,
wherein the movement unit is designed to carry out the movement in embodiment a) or the second power supply unit (30) is designed to carry out the phase reversal in embodiment b) after a simultaneous alternating current flow of the first and the second alternating current has taken place for a predetermined period of time.

8. The device (20) according to one of the preceding claims,
wherein the first and second induction coils are arranged on both sides of the receptacle (48) for the stabiliser bar (54) and the elastomeric bearing during operation.

9. The device (20) according to any one of the preceding claims,
wherein the first and second induction coils are, in operation, arranged outside a lateral projection of the receptacle (48) for the stabiliser bar (54) and the elastomeric bearing.

10. The method for adhering an elastomer bearing to a stabiliser bar (54) for a motor vehicle, comprising the following steps:
- Bracing the stabiliser bar (54) with the elastomer bearing;
- providing a first induction coil (24) and a second induction coil (26);
- generating a first alternating current flow through the first induction coil;
- generating a second alternating current flow through the second induction coil;
**characterised in that**
- the first alternating current flow and the second alternating current flow are generated in phase or in antiphase and inductively heat the stabiliser bar, and
- the stabiliser bar (54) is then exposed either to two induction coils whose alternating current flow is in antiphase when the first and second alternating current flows are in phase or to two induction coils whose alternating current flow is in phase when the first and second alternating current flows are in antiphase.

## Revendications

1. Dispositif pour faire adhérer un palier élastomère à une barre stabilisatrice (54) pour un véhicule automobile, présentant les caractéristiques suivantes :
une unité de serrage (22) qui comprend un logement (48) pour la barre stabilisatrice (54) et le palier élastomère et qui est conçue pour serrer le palier élastomère avec la barre stabilisatrice (54) ;
une première bobine d'induction (24) et une deuxième bobine d'induction (26) ;
une première unité d'alimentation électrique (28) adaptée pour générer un premier flux de courant alternatif à travers la première bobine d'induction (24), **caractérisée en ce qu'**une seconde unité d'alimentation électrique (30) est adaptée pour générer un second flux de courant alternatif à travers la seconde bobine d'induction (26), le premier flux de courant alternatif étant en phase ou en opposition de phase avec le second flux de courant alternatif, en particulier dans laquelle les première et seconde bobines d'induction sont adaptées pour chauffer la barre stabilisatrice reçue dans l'unité de serrage ;
et
a) une unité de déplacement est conçue pour déplacer l'unité de serrage (22) par rapport à une troisième bobine d'induction et à une quatrième bobine d'induction ou pour assister un déplacement, les troisième et quatrième bobines d'induction étant disposées, en fonctionnement, de part et d'autre du logement (48) pour la barre stabilisatrice (54) et le palier élastomère ; et
une troisième unité d'alimentation électrique est configurée pour générer un troisième flux de courant alternatif à travers la troisième bobine d'induction et une quatrième unité d'alimentation électrique est configurée pour générer un quatrième flux de courant alternatif à travers la quatrième bobine d'induction, dans lequel le troisième flux de courant alternatif est en phase avec le quatrième flux de courant alternatif lorsque le premier flux de courant alternatif est en opposition de phase avec le deuxième flux de courant alternatif et dans lequel le troisième flux de courant alternatif est en opposition de phase avec le quatrième flux de courant alternatif lorsque le premier flux de courant alternatif est en phase avec le deuxième flux de courant alternatif ;
ou
b) la deuxième unité d'alimentation (30) est adaptée pour effectuer une inversion de phase de la deuxième tension alternative.

2. Dispositif (20) selon la revendication 1,
dans lequel le dispositif comprend le palier élastomère et la barre stabilisatrice (54).

3. Dispositif (20) selon l'une quelconque des revendications précédentes,
dans lequel les première et deuxième bobines d'induction (24, 26) sont configurées pour générer un champ magnétique alternatif dans la barre stabilisatrice (54) de sorte que la barre stabilisatrice (54) est chauffée pour générer une réaction d'un agent adhésif appliqué entre le palier élastomère et la barre stabilisatrice (54) de sorte que le palier élastomère adhère à la barre stabilisatrice (54) après le refroidissement de la barre stabilisatrice (54).

4. Dispositif (20) selon l'une quelconque des revendications précédentes,
dans lequel l'unité de serrage (22) fait saillie axialement au-delà du logement (48) pour le palier en élastomère.

5. Dispositif (20) selon l'une quelconque des revendications précédentes,
dans lequel le logement (48) pour le palier en élastomère est décalé axialement par rapport au centre.

6. Dispositif (20) selon l'une des revendications précédentes,
dans lequel l'unité de déplacement est configurée pour effectuer le déplacement dans l'alternative a) ou la deuxième unité d'alimentation électrique (30) est configurée pour effectuer l'inversion de phase dans l'alternative b), lorsqu'au moins en un point de la barre stabilisatrice (54), une température prédéterminée est atteinte, notamment dans lequel la température prédéterminée est comprise entre 110°C et 270°C, de préférence entre 130°C et 250°C, plus préférentiellement entre 160°C et 230°C.

7. Dispositif (20) selon l'une quelconque des revendications précédentes,
dans lequel l'unité de déplacement est configurée pour effectuer le déplacement selon la configuration a) ou la deuxième unité d'alimentation électrique (30) est configurée pour effectuer l'inversion de phase selon la configuration b), après qu'un flux de courant alternatif simultané du premier et du deuxième courant alternatif a eu lieu pendant une période de temps prédéterminée.

8. Dispositif (20) selon l'une quelconque des revendications précédentes,
dans lequel, en fonctionnement, la première et la deuxième bobine d'induction sont disposées de part et d'autre du logement (48) pour la barre stabilisatrice (54) et le palier en élastomère.

9. Dispositif (20) selon l'une quelconque des revendications précédentes,
dans lequel la première et la deuxième bobine d'induction sont disposées, en fonctionnement, à l'extérieur d'une projection latérale du logement (48) pour la barre stabilisatrice (54) et le palier élastomère.

10. Procédé pour faire adhérer un palier élastomère à une barre stabilisatrice (54) pour un véhicule automobile, comprenant les étapes suivantes :
- Serrage de la barre stabilisatrice (54) avec le palier élastomère ;
- Mise à disposition d'une première bobine d'induction (24) et d'une deuxième bobine d'induction (26) ;
- Génération d'un premier flux de courant alternatif par la première bobine d'induction ;
- Générer un second flux de courant alternatif à travers la seconde bobine d'induction ; **caractérisé en ce que**
- le premier flux de courant alternatif et le deuxième flux de courant alternatif sont générés en phase ou en opposition de phase et chauffent la barre stabilisatrice par induction, et
- la barre stabilisatrice (54) est ensuite exposée soit à deux bobines d'induction dont le flux de courant alternatif est en opposition de phase lorsque le premier et le deuxième flux de courant alternatif sont en phase, soit à deux bobines d'induction dont le flux de courant alternatif est en phase lorsque le premier et le deuxième flux de courant alternatif sont en opposition de phase.
